# EUROPEAN PATENT APPLICATION

(11) **EP 3 147 691 A1**
(43) Date of publication of application: **29.03.2017**
(21) Application number: 16187622.2
(22) Date of filing: 07.09.2016
(51) Int. Cl.: G01S 19/03

(54) **SERVER-BASED GEO-POSITIONING SYSTEMS**

(30) Priority: 23.09.2015 GB 201516865
(71) Applicant: Nottingham Scientific Limited, Riverside Business Park Nottingham, Nottinghamshire NG2 1RT (GB)
(72) Inventor: Aguado, Luis Enrique, Nottingham, Nottinghamshire NG2 1RT (GB); Dumville, Mark, Nottingham, Nottinghamshire NG2 1RT (GB); Wales, Ben Peter, Nottingham, Nottinghamshire NG2 1RT (GB)
(74) Representative: Pearson, James Ginn

(57) **Abstract**

A geo-positioning system comprises: a user device (2) comprising one or more communications interfaces (14) and a signal processing module (12), and one or more computer servers (4) comprising one or more communications interfaces (16) and one or more security modules (20). The system is configured to operate both in a first mode and a second mode. In the first mode of operation the server (4) processes sampled GNSS signals to ascertain PVT information. In the second mode of operation, the signal processing module (12) of the user device (2) uses GNSS signals including encrypted GNSS signals and replica spreading code segments to ascertain PVT information concerning the user device (2).

## Description

### Field of the Invention

The present invention concerns geo-positioning systems. More particularly, but not exclusively, this invention concerns a server-based geo-positioning system and a method of operating such a system. The invention also concerns a user device for use with such a system and a server having a security module for use with such a system.

### Background of the Invention

Geo-positioning systems such as Global Navigation Satellite Systems ("GNSS") may be used as a navigation system for providing position, velocity and timing (PVT) information (sometimes referred to as PNT systems - Positioning Navigation and Timing) for a wide variety of applications. Examples of GNSS are GPS, GLONASS, GALILEO and BEIDOU. Currently, only GPS and GLONASS are global systems, but GALILEO and BEIDOU are being developed as future global GNSS systems.

GNSS systems, such as GALILEO, cater for both civilian and governmental applications. Civilian applications use the open (non-encrypted) signals that are broadcast by the GNSS satellites. Non-civilian applications (such as used by government authorised users, emergency service providers, or the like) make use of restricted access (encrypted) signals, which are also broadcast - for example the public regulated service (PRS) proposed for the GALILEO system. There may also be combinations of civilian encrypted signals, like those for commercial services, for which the techniques described herein may also apply. The term "encrypted" is used herein to refer to all restricted access forms of GNSS systems. In order to extract PVT information from an encrypted signal a signal processor correlates received signals from the satellites with signals generated by a security module, which includes the necessary cryptographic algorithms and associated key(s). The protection of the keys, cryptographic algorithms and security modules imposes a significant operational overhead on any system or application that uses the encrypted aspects of a GNSS system, as do the additional hardware costs that are typically required in order to provide robust anti-tamper security modules. There may therefore be advantages, for certain applications which require processing of encrypted GNSS signals, in using the assistance of a remotely located server (for example in a service centre) having an associated security module as opposed to providing a security module with the GNSS receiver of a user terminal. One security module may serve the needs of many user devices. Such a server-based PVT service provides a means for providing relatively low-cost navigation services whilst still retaining many of the benefits that stem from access to the information provided in the encrypted GNSS signals, thus opening up the use of such information to a wider base of users than might be possible with standard stand-alone GNSS receivers with integrated security modules.

Examples of prior art in this general field of application include: US 20130127664 A1 (Qualcomm); US 8837728 B2 (Boeing); WO 2014193221 A1 (Willem FOLKERS); US 20130176168 A1 (Sherman Lo - Stanford); EP 2799908 A1 (NSL); EP 2682785 A1 & US 20140009336 A1 (Fraunhofer); WO 2012007720 A (Thales UK); WO 2015001483 A1 (Qascom); EP 2680037 A1 (Airbus UK); EP 2746810 A1 (Airbus Germany); EP 2770340 A1 (Airbus Germany); EP 2799907 A1 (Airbus Germany); US 5952960 A (Trimble US); WO 2010105136 A (Cornell University); WO 2015014976 A1 (QinetiQ); WO 2014207223 A1 (QinetiQ & NSL); US 20050038601 A1 (Michael Dentinger, Ken Spratlin); and US 20090195354 A1 (Stanford University).

The present invention seeks to provide improvements in or relating to server-based GNSS systems.

### Summary of the Invention

The present invention provides, according to a first aspect of the invention, a geo-positioning system comprising a user device and one or more remote computer servers. The user device comprises one or more communications interfaces configured to receive encrypted and open service GNSS signals from a plurality of satellites; and configured to communicate with the one or more remote servers. The user device also comprises a signal processing module. The one or more computer servers comprise one or more communications interfaces configured to communicate with one or more user devices and one or more security modules. The system is configured to operate both in a first mode and a second mode. The first mode may be considered in certain embodiments of the invention as being a "sampling and processing" mode of operation. The second mode may be considered in certain embodiments of the invention as being a "transmission of spreading codes" mode of operation.

The first mode (e.g. "sampling and processing") of operation is one in which the following steps are performed: (a) a user device samples GNSS signals including encrypted GNSS signals from a plurality of satellites, (b) the user device sends to at least one of the servers sampled GNSS signals for remote processing, and (c) the server processes the sampled GNSS signals so received to ascertain PVT information concerning the user device. The processing performed by the server includes using at least one of the security modules to process encrypted parts of the sampled GNSS signals so received.

The second mode of operation (e.g. "transmission of spreading codes") is one in which the following steps are performed: (a) a user device receives GNSS signals including encrypted GNSS signals from a plurality of satellites, (b) at least one of the servers with the use of at least one of the security modules sends one or more replica spreading code segments which are received by the user device, and (c) the signal processing module of the user device then uses the GNSS signals including the encrypted GNSS signals and the one or more replica spreading code segments so received to ascertain PVT information concerning the user device. The step of the servers sending one or more replica spreading code segments may include utilising the security module to generate the replica spreading code segments.

Embodiments of the system of the present invention thus provide the possibility of two complementary server-based modes of ascertaining PVT information concerning a user device, with the benefit of extra information that is provided via the encrypted signals, whilst not requiring the user device to have its own local security module. The two complementary server-based modes may be used in combination to provide extra benefits over the use of either alone, as is explained in further detail herein.

It may be that the system is so arranged that it has the capability, in the first mode of operation, of the server using open service signals of the sampled GNSS signals so received by the server to ascertain PVT information and using the encrypted signals of the sampled GNSS signals so received by the server to confirm the authenticity of the open service signals of the GNSS signals used to ascertain the PVT information.

It may be that the system is so arranged that it has the capability, in the first mode of operation, of the server ascertaining PVT information from the encrypted signals of the sampled GNSS signals so received by the server.

It may be that the system is so arranged that it has the capability, in the second mode of operation, of the user device using open service signals of the GNSS signals so received to ascertain PVT information and using the one or more replica spreading code segments so received by the user device to confirm the authenticity of the open service signals of the GNSS signals used to ascertain the PVT information.

It may be that the system is so arranged that it has the capability, in the second mode of operation, of the user device ascertaining PVT information from the encrypted signals of the GNSS signals so received with the use of the one or more replica spreading code segments so received by the user device.

The signal processing performed by the server which utilises a security module to process encrypted parts of a GNSS signal and/or to generate/send replica spreading code segments may require the security module to have been preloaded (e.g. pre-programmed) with cryptographic information, such as a key, a particular set of one or more cryptographic algorithms, or the like.

It may be that the system is arranged to switch from one of the first and second modes of operation to the other in dependence on pre-set criteria. The pre-set criteria may be whether or not an external command is issued to so switch. Such a command may be manually issued. Such a command may be issued electronically in view of data or signals concerning parameters which affect the operation of the system, such parameters for example concerning signal conditions, environmental conditions, mission type, or the like.

It may be that the system is arranged to have the capability of operating in both the first and second modes of operation in parallel. There may be instances therefore in which the system is arranged to operate in the first mode of operation at the same time as operating in the second mode of operation.

It may be that the one or more communications interfaces of the user device and the one or more communications interfaces of the one or more computer servers are arranged to provide one or more secure communications channels. The one or more secure communications channels may utilise encrypted communication. The one or more secure communications channels may be in the form of wireless links. The wireless links may include the use of a commercial and publicly available telecommunications network, such as a mobile telecommunications network, for example 3G, 4G or 5G networks. The communications channels may utilise other types of telecommunications network such as TETRA /ESMCP, Satcom, and/or Wi-Fi networks. The communications channels may utilise a combination of different networks.

It may be that the one or more computer servers are provided at the same location, for example within a service centre. Multiple computer servers may be required to perform the functions of the one or more communications interfaces, of the one or more security modules, of the processing of sampled GNSS signals received from a user device to ascertain PVT information, of the processing of on the one hand encrypted GNSS signals and on the other hand open GNSS signals, of the creation of the one or more replica spreading code segments. It may be that a single server performs all such functions. There will typically be clear division between the encrypted / secure parts of the system and the other parts of the system within the one or more servers.

The user device may be in the form of a GNSS receiver device where the primary function of the device is to utilise GNSS services. The user device may be in the form of a device having other additional functions. The device may for example be in the form of a smart-phone, or tablet device. The user device may be in the form of a vehicular navigation device (PND). The user device may be in the form of a man-mounted officer navigation system. The user device may be in the form of autonomous system navigation equipment. It may be that one or more servers at a first location service the needs of multiple devices located at different locations. The multiple devices need not be of the same type. The user device may be configured to operate in a third (non-server-based) mode, in which open signals are used to obtain PVT information without the use of encrypted parts of the GNSS signal.

The sampling of the GNSS signals by the user device (in the first mode) may include extracting the digital signals represented by the RF signal by means of signal processing steps which are performed by the user device. The user device may be configured, when operating in the first mode, to perform a signal processing step in addition to the sampling of GNSS signals before sending the sampled GNSS signals for remote processing by the server. Such signal processing may include checking for interference. Such signal processing may include reducing the transmission bandwidth by selecting certain frequency bands of interest. Such signal processing may include generating open service PVT and/or correlation products. Such signal processing by the user device in the first mode may generate data products separate from the GNSS samples that are then transmitted to the server(s) together with the sampled GNSS signals for remote processing. In such cases, it may be that the processing requirements of the server(s) are reduced. The server(s) may for example be configured to receive correlation products as part of the signal samples sent by the user device such that in order for the server(s) to extract PVT information concerning the user device from the open GNSS signal, the server(s) need(s) only process those correlation products (as opposed to the actual uncorrelated open signal samples, which may - or may not - be additionally sent). It is therefore within the scope of the present invention for the system to be configured such that, in use, the user device samples and processes GNSS signals including encrypted GNSS signals from a plurality of satellites, the user device sends to at least one of the servers sampled and processed GNSS signals (for example in the form of a data product that is derived from the processing of the open signal part of the GNSS signals and sampled/processed encrypted GNSS signals) for, further, remote processing, and the server(s) process(es) the sampled and processed GNSS signals so received to ascertain PVT information concerning the user device. It may be that the user device is configured to use open service signals of the GNSS signals to ascertain PVT information. The sampled and processed GNSS signals so sent from the user device to the server may, for example, be in the form of a data product that is derived from the processing of the open signal part of the GNSS signals together with sampled/processed encrypted GNSS signals.

The system may include other ancillary systems, for example, parts of the ground-based infrastructure that is used to operate a GNSS satellite system. Such ground-based infrastructure may include GNSS systems that are located in a different location from both the one or more servers and the one or more user devices. Encryption keys used in the operation of the GNSS satellite system may be provided by means of such parts of the ground-based infrastructure.

The present invention provides, according to a second aspect of the invention, a geolocation method. The method may comprise a step of a user device receiving GNSS signals including encrypted GNSS signals from a plurality of satellites. The user device may then perform a step of sending to a server GNSS signals sampled from those received for remote processing. The server may perform a step of processing the sampled GNSS signals so received to ascertain PVT information concerning the user device. The processing performed by the server may include using a security module associated with the server to process encrypted parts of the sampled GNSS signals so received. There may be a step of the server, with the use of the security module, sending one or more replica spreading code segments to the user device. There may be a step of pre-loading the server (for example its security module) with cryptographic information in order to perform the steps of processing encrypted parts of a GNSS signal and/or generating replica spreading code segments. The user device may use the GNSS signals received and the one or more replica spreading code segments so received to ascertain PVT information concerning the user device. The method may utilise the geo-positioning system according to the first aspect of the invention as claimed or described herein, including any optional features relating thereto.

In certain embodiments, the method may be so performed that the steps of the server ascertaining PVT information concerning the user device and the user device ascertaining PVT information concerning the user device are performed in parallel. It will be appreciated that such steps need not be performed at exactly the same time in order for it to be the case that the steps are conducted in parallel. It may be the case that when operating in parallel, the step of the server ascertaining PVT information concerning the user device and the user device ascertaining PVT information concerning the user device are performed within a time period of the order of a minute, or so, of each other.

In certain other embodiments, the method may be so performed that the steps of the server ascertaining PVT information concerning the user device and the user device ascertaining PVT information concerning the user device are performed at different times, for example more than an hour apart. The method may be so performed that the steps of the server ascertaining PVT information concerning the user device are performed exclusively for a period of time and the user device ascertaining PVT information concerning the user device are performed are performed exclusively for a different period of time.

It may be that the step of the server ascertaining PVT information concerning the user device is performed using the open signal of the sampled GNSS signals so received, and the step of using the security module to process encrypted parts of the sampled GNSS signals verifies the authenticity of the open signal.

It may be that the step of the server ascertaining PVT information concerning the user device is performed using PVT information extracted from the encrypted parts of the sampled GNSS signals with the use of the security module.

It may be that the step of the user device ascertaining PVT information concerning the user device is performed using the open signal of the GNSS signals received, the one or more replica spreading code segments being used to verify the authenticity of the open signal. For example, it may be that verification of the authenticity of the open signals is achieved by correlating the encrypted replica spreading code segments received from the server against the encrypted signals captured alongside by the user device with the same/very similar timing.

It may be that the step of the user device ascertaining PVT information concerning the user device is performed using PVT information extracted from the encrypted parts of the GNSS signals received, the one or more replica (e.g. encrypted) spreading code segments being used to correlate against (or decode) the encrypted GNSS signals.

As mentioned above, the method may utilise the geo-positioning system according to the first aspect of the invention as claimed or described. There may be a step of operating the system in at least one of the first and second modes of operation. The method may include operating the system in the second mode (e.g. transmission of spreading codes) of operation and, preferably at the same time, performing the steps of (a) the user device sampling the GNSS signals from the plurality of satellites, (b) the user device sending to at least one of the servers sampled GNSS signals for remote processing, and (c) the server processing the sampled GNSS signals so received. It may be that the server processes the sampled GNSS signals so received to provide supplementary information. Such supplementary information may be in the form of authentication of open signals of the GNSS signals so received. Such supplementary information may be in the form of using the encrypted parts of the GNSS signals so received. It may be that the server processes the sampled GNSS signals so received to provide situational awareness information. For example, the sampled GNSS signals so received may include situational awareness information in the form of local signal quality, local threats and/or local interference.

It may be that, when operating the system in the second mode of operation and at the same time the server is used to receive sampled GNSS signals from a user device, the server archives the sampled GNSS signals so received, for example for future auditing purposes or for use as forensic evidence. The sampled GNSS signals so archived may be stored as raw signal samples, for example without further significant processing by the server.

It may be that, when operating the system in the second mode of operation and at the same time the server is used to receive sampled GNSS signals from a user device, the server transmits situational awareness information to one or more user devices (for example at least to the user device from which the sampled GNSS signals are received). Such situational awareness information may additionally or alternatively be transmitted to one or more user devices not being the user device from which the sampled GNSS signals are received. For example, the server may detect that there is interference local to the user device and communicate that information to one or more user devices. The server may identify the type of interference detected and communicate that information to one or more user devices.

It may be that, when operating the system in the second mode of operation and at the same time the server is used to receive sampled GNSS signals from a user device, the server processes the sampled GNSS signals and uses encrypted parts of the sampled GNSS signal to provide access control. Thus, in accordance with certain embodiments, the server processing the sampled GNSS signals so received using the encrypted parts of the sampled GNSS signal either to verify the authenticity of the open signal the sampled GNSS signal which may then be used to ascertain non-spoofable PVT information concerning the user device, or to extract non-spoofable PVT information concerning the user device from the encrypted parts of the sampled GNSS signal. Access control may then be provided using the non-spoofable PVT information concerning the user device. For example, if the PVT information concerning the user device shows that the location of the device is outside a permitted range, the server may reduce or remove access of further communication from the server. For example, the server may cease transmitting the replica spreading code segments to the user device concerned.

There may be a step of a user device sending extracted PVT information (i.e. not in the form of a GNSS signal, or sample thereof) to the server. There may be a step of a server sending extracted PVT information (i.e. not in the form of a GNSS signal, or sample thereof) to a user device.

As mentioned above, the server may process the sampled GNSS signals received to verify and validate PVT information sent by the user device to the server.

The server may perform tracking of one or more user devices, for example using the PVT information concerning the user device ascertained from the sampled GNSS signals received in the first mode of operation, but preferably also using the second mode of operation in parallel (which may provide validation and verification of the location calculated by the server in the first mode - sampling and processing - of operation).

The method may include a step of ascertaining the authenticity of open GNSS signals used by the user device or by the server (or both). It may be that the step of ascertaining the authenticity of the open GNSS signals results in indicating to a user (whether a user of the server(s) or of the user device) that a particular PVT measurement can or can not be considered as authentic. The indication may be given as a binary result (authentic / not authentic) in which case, there may be cases where the user receives an indication that a particular PVT measurement can not be considered as authentic but only because it was not possible to authenticate it, rather than there being certainty that the open GNSS signals have been tampered with. The indication may be given as one of three or more measures of the authenticity, possibly expressed as a degree of confidence. It may be that the indication provided is one of the group consisting of "authentic", "not authentic", and "not possible to authenticate".

When the system operates in the first mode (e.g. sampling and processing) of operation the processor of the user device may perform pre-processing of the received RF GNSS signals before sending then to the server. The server may perform a correlation with the sampled GNSS signals so received, but may need to perform some signal processing of the sampled GNSS signals so received before performing the correlation.

When the system operates in the second mode (e.g. transmission of spreading codes) of operation, it may be that replica spreading code segments are generated by a code generator associated with, or forming part of, a server. The replica spreading code segments so generated and transmitted do not reveal the details of the cryptographic key. The replica spreading codes generated may relate to multiple satellites and may be multiplexed together before transmission from the server. Multiple replica code segments may alternatively be transmitted independently. The replica spreading codes generated may be generated only for those satellites that will be in view of the user device. The replica spreading code segments may be in the form of snippets, representing a replica of a small extract of what the satellite would have transmitted at the relevant time. It may be that the snippets are transmitted over a secure communications network (e.g. over an encrypted communication channel). In the case where snippets are used, the user device may use the snippets to perform a time aligned correlation which can be used to verify the authenticity of the non-encrypted (open) signal and/or to directly ascertain PVT information.

The present invention further provides, according to a further aspect of the invention, a user device for use as the user device of the first or second aspects of the invention as claimed or described herein, including any optional features relating thereto. The user device will thus typically comprise one or more communications interfaces configured to receive encrypted and open service GNSS signals from a plurality of satellites; and to communicate with one or more remote servers. The user device will also typically comprise a signal processing module. The user device may be programmed with a computer program product configured to cause the user device to perform its function. The present invention thus also provides such a computer program product.

The present invention further provides, according to a further aspect of the invention, one or more servers for use as the one or more servers of the first or second aspects of the invention as claimed or described herein, including any optional features relating thereto. The one or more servers will thus typically comprise one or more communications interfaces configured to communicate with one or more user devices. The one or more servers will also typically comprise one or more security modules. The one or more computer servers may be programmed with one or more computer program products configured to cause one or more computer servers to perform their function. The present invention thus also provides one or more computer program products so configured to cause, when the one or more computer program products are executed, the one or more computer servers to perform their function.

It will of course be appreciated that features described in relation to one aspect of the present invention may be incorporated into other aspects of the present invention. For example, the method of the invention may incorporate any of the features described with reference to the apparatus of the invention and *vice versa.*

The following numbered clauses set out subject matter that is part of the present patent application:
Clause 1. A geo-positioning system comprising
   (a) a user device comprising
      (i) one or more communications interfaces configured
         - to receive encrypted and open service GNSS signals from a plurality of satellites; and
         - to communicate with one or more remote servers; and
      (ii) a signal processing module
   (b) one or more computer servers comprising
      (i) one or more communications interfaces configured to communicate with one or more user devices; and
      (ii) one or more security modules;
         wherein
         the system is configured to operate both in a first mode and a second mode; the first mode of operation being one in which
         - a user device samples GNSS signals including encrypted GNSS signals from a plurality of satellites,
         - the user device sends to at least one of the servers sampled GNSS signals for remote processing, and
         - the server processes the sampled GNSS signals so received to ascertain PVT information concerning the user device, the processing performed by the server including using at least one of the security modules to process encrypted parts of the sampled GNSS signals so received;
         the second mode of operation being one in which
         - a user device receives GNSS signals including encrypted GNSS signals from a plurality of satellites,
         - at least one of the servers with the use of at least one of the security modules sends one or more replica spreading code segments which are received by the user device, and
         - the signal processing module of the user device then uses the GNSS signals including the encrypted GNSS signals and the one or more replica spreading code segments so received to ascertain PVT information concerning the user device.
Clause 2. A geo-positioning system according to clause 1, wherein the system is so arranged that it has the capability, in the first mode of operation, of the server using open service signals of the sampled GNSS signals so received by the server to ascertain PVT information and using the encrypted signals of the sampled GNSS signals so received by the server to confirm the authenticity of the open service signals of the GNSS signals used to ascertain the PVT information.
Clause 3. A geo-positioning system according to clause 1 or clause 2, wherein the system is so arranged that it has the capability, in the first mode of operation, of the server ascertaining PVT information from the encrypted signals of the sampled GNSS signals so received by the server.
Clause 4. A geo-positioning system according to any preceding clause, wherein the system is so arranged that it has the capability, in the second mode of operation, of the user device using open service signals of the GNSS signals so received to ascertain PVT information and using the one or more replica spreading code segments so received by the user device to confirm the authenticity of the open service signals of the GNSS signals used to ascertain the PVT information.
Clause 5. A geo-positioning system according to any preceding clause, wherein the system is so arranged that it has the capability, in the second mode of operation, of the user device ascertaining PVT information from the encrypted signals of the GNSS signals so received with the use of the one or more replica spreading code segments so received by the user device.
Clause 6. A geo-positioning system according to any preceding clause, wherein the system is arranged to switch from one of the first and second modes of operation to the other in dependence on pre-set criteria.
Clause 7. A geo-positioning system according to any preceding clause, wherein the system is arranged to have the capability of operating in both the first and second modes of operation in parallel.
Clause 8. A geo-positioning system according to any preceding clause, wherein the one or more communications interfaces of the user device and the one or more communications interfaces of the one or more computer servers are arranged to provide one or more secure communications channels.
Clause 9. A geolocation method comprising the steps of:
   a user device receiving GNSS signals including encrypted GNSS signals from a plurality of satellites,
   the user device sending to a server GNSS signals sampled from those received for remote processing,
   the server processing the sampled GNSS signals so received to ascertain PVT information concerning the user device, the processing performed by the server including using a security module associated with the server to process encrypted parts of the sampled GNSS signals so received,
   the server, with the use of the security module, sending one or more replica spreading code segments to the user device, and
   the user device using the GNSS signals received and the one or more replica spreading code segments so received to ascertain PVT information concerning the user device.
Clause 10. A geolocation method according to clause 9, wherein the step of the server ascertaining PVT information concerning the user device is performed using the open signal of the sampled GNSS signals so received, and the step of using the security module to process encrypted parts of the sampled GNSS signals verifies the authenticity of the open signal.
Clause 11. A geolocation method according to clause 9, wherein the step of the server ascertaining PVT information concerning the user device is performed using PVT information extracted from the encrypted parts of the sampled GNSS signals with the use of the security module.
Clause 12. A geolocation method according to any of clauses 9 to 11, wherein the step of the user device ascertaining PVT information concerning the user device is performed using the open signal of the GNSS signals received, the one or more replica spreading code segments being used to verify the authenticity of the open signal.
Clause 13. A geolocation method according to any of clauses 9 to 11, wherein the step of the user device ascertaining PVT information concerning the user device is performed using PVT information extracted from the encrypted parts of the GNSS signals received, the one or more replica spreading code segments being used to correlate against and/or decode the encrypted GNSS signals.
Clause 14. A geolocation method using the geo-positioning system of any of clauses 1 to 8, and operating the system in at least one of the first and second modes of operation.
Clause 15. A geolocation method according to clause 14, including the steps of operating the system in the second mode of operation and at the same time
   - the user device sampling the GNSS signals from the plurality of satellites,
   - the user device sending to at least one of the servers sampled GNSS signals for remote processing, and
   - the server processing the sampled GNSS signals so received.
Clause 16. A geolocation method according to clause 15, in which the server processes the sampled GNSS signals so received to provide situational awareness. Clause 17. A geolocation method according to clause 15 or clause 16, in which the server archives the sampled GNSS signals so received.
Clause 18. A geolocation method according to any of clauses 15 to 17, including a step of the server transmitting situational awareness information to one or more user devices.
Clause 19. A geolocation method according to clause 15, including a step of the server processing the sampled GNSS signals and using encrypted parts of the sampled GNSS signal to provide access control.
Clause 20. A user device comprising (i) one or more communications interfaces configured to receive encrypted and open service GNSS signals from a plurality of satellites; and to communicate with one or more remote servers; and (ii) a signal processing module, the user device being configured to perform the function of the user device of any of the preceding clauses.
Clause 21. One or more computer servers comprising (i) one or more communications interfaces configured to communicate with one or more user devices; and (ii) one or more security modules; the one or more computer servers being configured to perform the function of the one or more computer servers of any of clauses 1 to 19.
Clause 22. A computer program product configured to cause, when the computer program is executed, a user device to form the user device as set out in clause 20. Clause 23. A suite of one or more computer program products configured to cause, when the suite of one or more computer program products are executed, one or more computer servers to form the one or more computer servers as set out in clause 21.

### Description of the Drawings

Embodiments of the present invention will now be described by way of example only with reference to the accompanying schematic drawings of which:
- Figure 1: shows a GNSS system including a user device and a server according to a first embodiment of the invention;
- Figure 2: illustrates a use of the GNSS system of the first embodiment of the invention according to a first arrangement;
- Figure 3: illustrates a use of the GNSS system of the first embodiment of the invention according to a second arrangement;
- Figure 4: illustrates a use of the GNSS system of the first embodiment of the invention according to a third arrangement;
- Figure 5: illustrates a use of the GNSS system of the first embodiment of the invention according to a fourth arrangement; and
- Figure 6: illustrates a use of the GNSS system of the first embodiment of the invention according to a fifth arrangement.

### Detailed Description

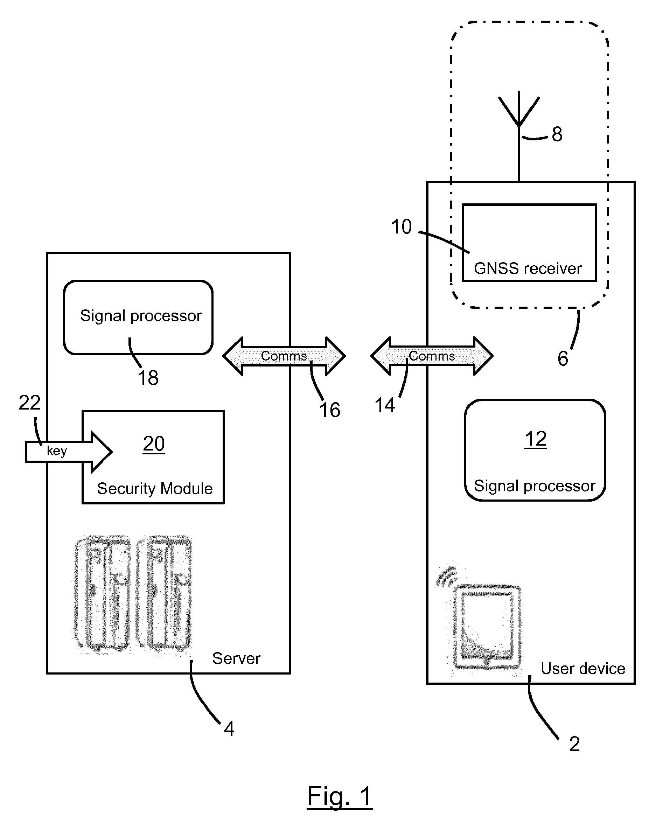

The embodiments of the invention all concern a server-based geo-positioning system in which a user device communicates with a server. Figure 1 shows schematically such a user device 2 and such a server 4. The user device 2 includes a GNSS interface 6 comprising an RF antenna 8 and a GNSS receiver module 10, a signal processing unit 12 and a communications link module 14 for establishing a secure communications link with a remote server. The user device 2 may be in the form of an autonomous stand-alone PVT receiver unit (e.g. a tracking tag, a personal navigation device, or other GNSS receiver device etc.) or a module/function part of or connected wired/wirelessly to a larger system (e.g. a smartphone, satellite phone, vehicular navigation device, man-mounted officer navigation device, an autonomous system navigation device, or the like). The GNSS receiver module 10 is able to detect GNSS signals from RF signals received via the antenna 8. The signal processing module 12 in the user device 2 is in the form of a computer processor, with memory, and which operates under the control of software.

The remote server 4 has a communications link module 16 for establishing a secure communications link with one or more such user devices 2, a signal processing unit 18 and a security module 20 for extracting information from encrypted GNSS signals, when provided with an appropriate cryptographic key 22. The signal processing module 18 of the server 4 is in the form of a computer processor, with memory, and which operates under the control of software.

The system may have particular relevance to the use of the public regulated service (PRS) of the Galileo system, but may have use in relation to Galileo CS signals, and/or in relation to the use of encrypted signals of other GNSS systems, such as the GPS P(Y) and M-code signals and or the GLONASS P-code signals, and/or other radio-navigation systems (whether satellite-based or terrestrial).

The system is configured to operate in a first mode, referred to conveniently as a sampling and processing mode, and also a second mode, referred to conveniently as a transmission of spreading codes mode. In each mode of operation, the security module 20 associated with the server 4 is used to process the encrypted parts of a GNSS signal in order to improve the accuracy and/ or confidence of a calculation of the position of the user device 2, without requiring the user device 2 to have its own security module for processing encrypted GNSS signals.

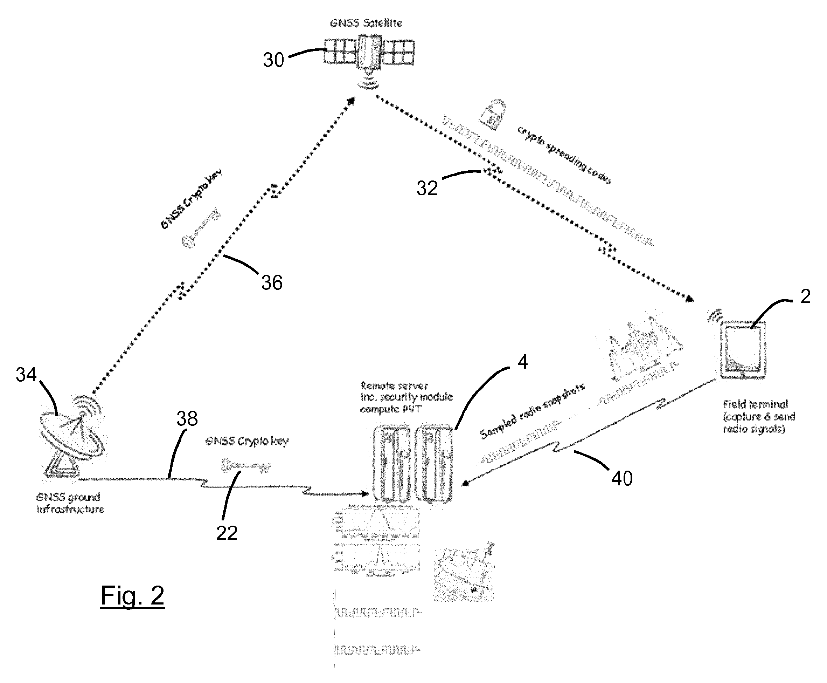

The operation of a server-based geo-positioning system using a sampling and processing technique has been proposed within the "ASPIRE" project - see WO 2014/207223 for further details of the techniques envisaged. The contents of WO 2014/207223 are fully incorporated herein by reference. In this mode of operation, the system of the embodiment of the invention operates as shown in Figure 2 of the accompanying drawings, as will now be described.

With reference to Figure 2, multiple GNSS satellites 30 (only one of which is shown in Figure 2) transmit GNSS signals 32 including both encrypted and non-encrypted GNSS signals, which are received by a user device (field terminal). The encrypted GNSS signals transmitted by the satellites are encoded by means of cryptographically-generated spreading codes (sometimes referred to as ranging codes), controlled for example by means of ground-based GNSS infrastructure 34 (see arrows 36, 38 representing the steps of sending sufficient cryptographic information from the ground-based GNSS infrastructure 34 to the satellites 30 and the servers 4). The non-encrypted GNSS signals are also effectively encoded, but with a non-encrypted spreading code (ranging code). The user device 2 samples the received GNSS signals including both encrypted and non-encrypted ("open") GNSS signals. The samples are pre-processed by the user device 2, by its processing module 12. Such signal processing may include checking for interference, reducing the transmission bandwidth by selecting frequency bands of interest and/or generating open service PVT or correlation products (for subsequent transmission to the server). The samples (possibly with other data depending on the application) are then sent (see arrow 40) to the server 4 for correlation with local replica spreading code signals, generated with the use of an appropriate GNSS cryptographic key 22 (obtained from the ground-based GNSS infrastructure 34). The use of the replica spreading code signals and the correlation with the pre-processed encrypted GNSS signal samples from the user device 2 are handled by the security module 20 associated with the server 4. The server 4 is thus able to extract information from the GNSS samples so received to ascertain PVT information from the open GNSS signal and using the encrypted GNSS signals to authenticate the open signals so received and/or to ascertain PVT information from the encrypted GNSS samples. Thus, authenticated open service or independent (encrypted - e.g. PRS) PVTs are computed. This gives the server 4 assurance that the PVT computed is authentic. Where the PVT information is generated at a remote location (for example a location remote from the user device 2, such as a processing centre) this is well suited to tracking applications. Whilst not shown in Figure 2, the PVT could optionally be retransmitted back to the user device 2 in the field for authenticated navigation, but this would entail longer latencies than would normally be desirable.

The pre-processing of the received RF signal may be performed as described in WO 2014/207223 (QinetiQ / NSL), the contents of which being fully incorporated herein by reference thereto.

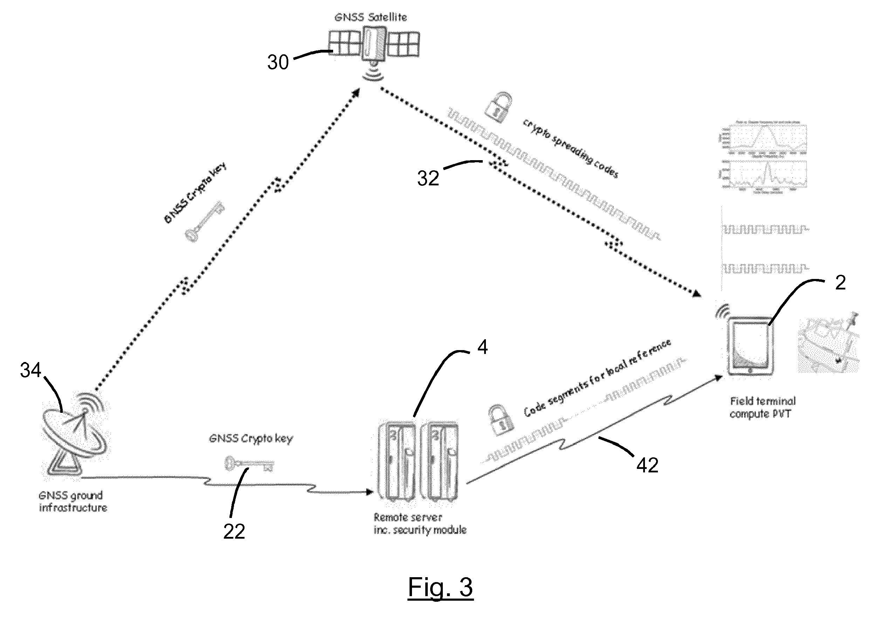

The operation of a server-based geo-positioning system using a transmission of spreading codes technique has been proposed within the "PROSPA" project - see the paper by M. Turner, A. Chambers, E. Mak, L.E. Aguado, B. Wales, M. Dumville: "PROSPA: Open Service Authentication", ION GPS GNSS 2013. The contents of that paper are fully incorporated herein by reference. In this mode of operation, the system of the embodiment of the invention operates as shown in Figure 3 of the accompanying drawings, as will now be described.

With reference to Figure 3, multiple GNSS satellites 30 (only one of which is shown in Figure 3) transmit GNSS signals 32 including both encrypted and non-encrypted GNSS signals, which are received by a user device (field terminal) 2. As mentioned above, the encrypted GNSS signals transmitted by the satellites 30 are encoded by means of spreading codes employing cryptographic methods, with the use of ground-based GNSS infrastructure 34.

The user device 2 receives GNSS signals including both encrypted and non-encrypted ("open") GNSS signals. Replica spreading code signals are transmitted (arrow 42) by the remote server (generated with the use of the associated security module 20 and the appropriate GNSS cryptographic key 22) as code segments, in this case over a secure communications link, to the user device 2. The replica spreading code segments transmitted are in the form of replicas of small sections of the spreading codes transmitted by the satellites for a given instant in time and broad geographical region (e.g. Western Europe). The user device 2 can either use such spreading code segments to authenticate the open GNSS signals received locally and/or to ascertain PVT information from the navigation data of the encrypted GNSS signals received locally.

The replica spreading code segments transmitted (and the associated signal processing steps relating thereto) may be in the form of the use of "snippets" and/or "sub-snippets" as proposed in the context of the PROSPA project (see the "PROSPA: Open Service Authentication" paper mentioned above for further details). The creation and use of the replica spreading code segments may be as proposed in EP 2 770 340 (Astrium GmbH, now Airbus Defence and Space) in connection with the ranging code chips mentioned therein. The contents of EP 2 770 340 are fully incorporated herein by reference.

The proposed server-based approaches of "sampling and processing" (e.g. ASPIRE) and "transmission of spreading codes" (e.g. PROSPA) have been viewed as meeting different operational needs. The present embodiment combines the two approaches to provide a multi-mode GNSS server-based geo-positioning system in which both spreading codes are transmitted to the mobile user device from the server for processing local to the user device and GNSS signals are captured and sent by the user device to the server for processing by the server. The presently described embodiment combines the functions of both the "sampling and processing" and "transmission of spreading codes" approaches, which yields hitherto unexpected additional functionality and benefit as will now be explained.

The multi-mode system of the present embodiment provides benefit in a variety of different operational cases where either the "sample and processing" or "transmission of spreading codes" approaches for server-PRS services alone would not offer as good a technical solution because of one or more of the following factors/scenarios:
- mission conditions may be variable due to availability or reliability of communications networks - in such a case an authenticated navigation application using the present embodiment could switch to tracking (with or without PVT return to the field) which would better withstand variable communication delays and/or patches of no coverage;
- operations may not permit any field-originating transmission (radio silence) for some of the time and/or may not permit secure tracking some of the time;
- non-reliant secure navigation and tracking may be required for independent security requirements (at field and at tracking centre), on verification and validation of locations of critical assets or events e.g. for evidence trail of an authenticated navigation application;
- geographical access control may be provided, using the present embodiment, which restricts the field receiver gaining access to the broadcast messages or restricts the service level by changing the type of broadcast message to that field receiver. This access control may be introduced for security or commercial reasons (e.g. service level agreement over different territories). It may be that the navigation equipment user cannot be trusted to comply with geographical access controls and may try to spoof the service provider;
- radio signals in the frequency spectrum of interest for GNSS signals may, in the location of the user device / mobile terminal, be degraded due natural interference or attack (spoofing or jamming) - in such a case, the service centre may wish to obtain captures of the radio spectrum at the user's location in the field to analyse and to issue countermeasures or share information with other users in the same location.

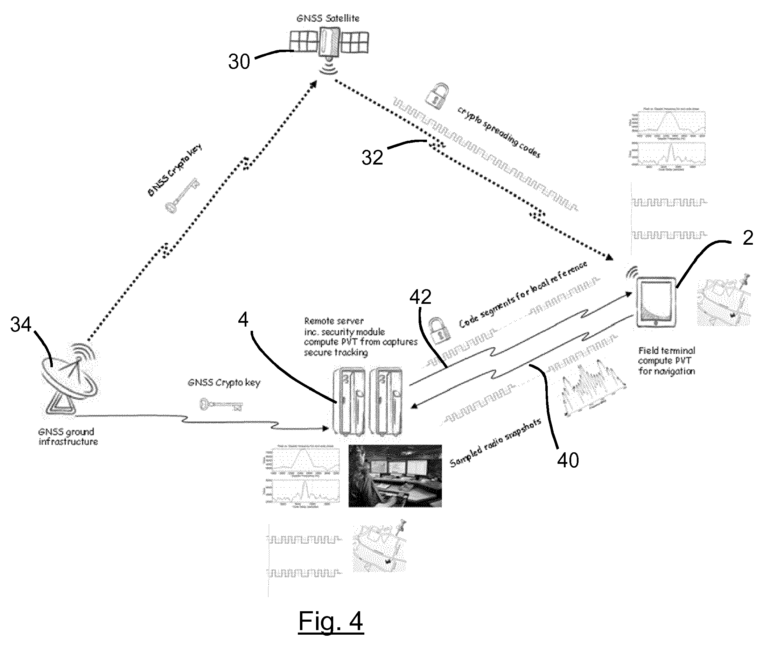

In one arrangement, shown in Figure 4, the system of the embodiment determines which of the first mode ("sampling and processing" - arrow 40) and second mode ("transmission of spreading codes" - arrow 42) to work in, in dependence on mission conditions such as local deployment environment, quality / availability of GNSS signal reception, quality of secure communication channel, power consumption profile, strategic considerations, and the like. It may be that the decision to switch from one mode to the other may be taken by the user device 2. It may be that the decision to switch from one mode to the other may be taken by the server 4. It may be that the user device has the capability to operate in the first mode or the second mode, or in both modes, but that such functionality is only available once enabled by an authorised service provider. The available functionality of the device 2 may be set on initial issue of the device, may be set for individuals missions and/or for a limited period, and/or on a functional upgrade. The enabling of the functionality may be set in software. In a modification of this embodiment, the user device may be operated using only the "sample and processing" mode, only the "transmission of spreading codes" mode or in a dual-mode in which both the "sample and processing" and the "transmission of spreading codes" approaches are used. The choice of how the user device is operated may be based on the intended mission and objectives, the availability of services/infrastructure/ resources (i.e. power, communications) and the cleanliness of the radio spectrum.

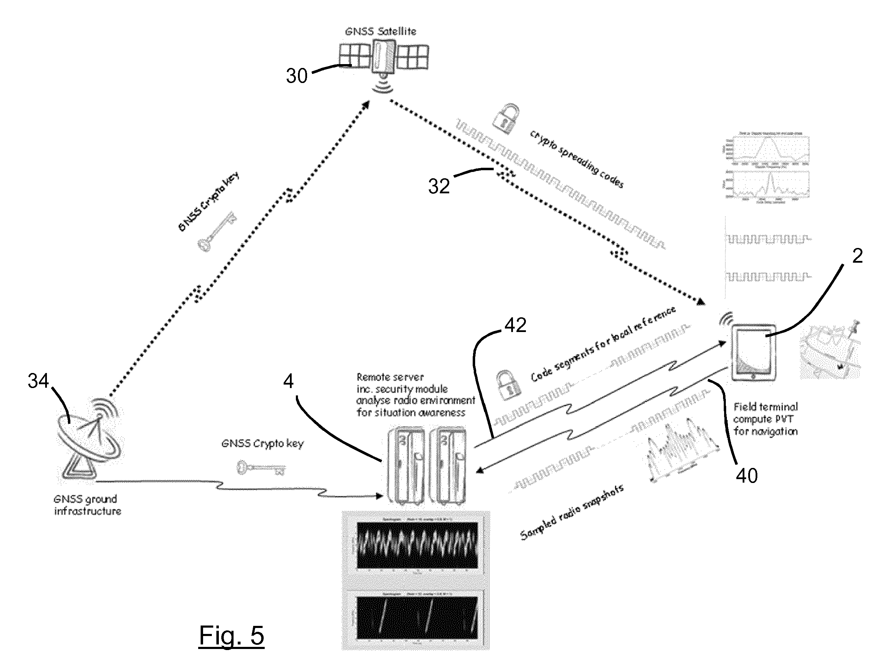

In another arrangement, shown in Figure 5, the system is used primarily in the second ("transmission of spreading codes" - arrow 42) mode with "sample and processing" captures (arrow 40), in accordance with the first mode of operation, being sent to the processing server 4 as and when required, to provide situational awareness information. Depending on the application in question, the "sample and processing" may be at relatively frequent intervals, may be intermittently at a relatively low rate, or only on request or in response to a particular event or pre-set criteria. For example, if local interference is detected pre-processed samples of the RF signal may be sent to the server, for processing and analysis (for example using the techniques disclosed in International Patent Application No. PCT/GB2015/052682). The contents of that application are fully incorporated herein by reference. If a particular type of interference is detected and identified, the server may then initiate some form of countermeasures and/or share the intelligence gathered with other user device in or near the same location. Signal samples may be periodically captured and sent to the server for storage for future audit reference (as an evidence trail for example). The data stored may for example be the raw samples as captured, or may be in the form of data extracted from the samples. It may be that the server is arranged periodically to process the received signal samples and compute authentic PVT information for central storage. Periodic "sample and processing" captures may be required to verify / validate locations of user devices, particularly if associated with critical assets in the field.

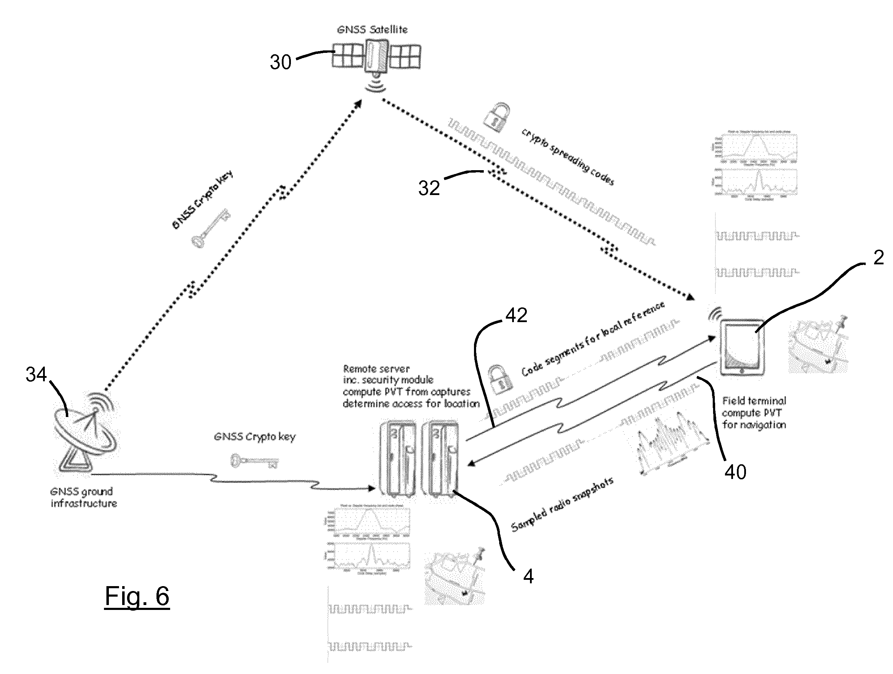

In another arrangement, shown in Figure 6, the system is used primarily in the second ("transmission of spreading codes" - arrow 42) mode with "sample and processing" captures (arrow 40) being used to allow for geographical access control. By way of further explanation, the server 4 uses the mechanism of a user device 2 sending (arrow 40) samples derived from the genuine encrypted GNSS RF signal captured, to check / validate the position of the user device 2. If the geographical position is as expected, the server 4 continues to transmit (arrow 42) spreading code segments over the communications channel. If however, the geographical position is outside an expected geographical area, the server 4 may be configured to cease transmission of the spreading code segments (or may be configured to transmit invalid / corrupted spreading code segments). In use, the server 4 at the service centre requests periodic signal captures to process at the server 4 to enforce geographical access control, thus ensuring that secure services are only operated in authorised locations. The server-based authenticated PVT ensures that the user device 2 cannot provide a false location in order to continue accessing the service when the device 2 is not within a predefined geographical area. Also, such a method enables the server 4 to commence providing the service (transmission of spreading codes over a secure communications link) to a particular mobile user device only once it has been confirmed by the server 4 that the mobile device 2 is in the valid area of operation. Such geographical access controls may be enforced regularly as a matter of course in certain embodiments, for example if user devices are provided under service terms that limits the geographical extent of use. In certain embodiments, geographical access controls may be enforced after a certain period of time has elapsed since an initial access level has been set, or as soon as the user starts a new mission. In other embodiments, geographical access controls may be enforced only in certain exceptional circumstances.

Geographical access controls may be of use to operators of authenticated navigation/location services using GNSS geo-locating systems that make use of encrypted signals. Such operators may want to be able to enforce access control based on geographical rules. It may be that in the context of a service based on the use of transmission of spreading codes by a server in a service centre, the user's PVT is computed at the field receiver and the service centre uses the user's reported position to enable/restrict access or service level. The service operator could, under certain (exceptional) conditions or situations, make the delivery of subsequent system messages (e.g. snippets, PRN sequences or reference spectrum captures) conditional on the field receiver returning information about their PVT. Without the use of the embodiment of the invention, a user who does not want to be restricted (or does not want to transmit his/her true location over a communications link, encrypted or not encrypted) could spoof the reported location, thus preventing effective geographical access control. With the present embodiment, the field receiver is required to transmit to the service centre a sampled spectrum capture including encrypted signals (e.g., Galileo PRS or other) or open signals (Galileo OS or other) or both at a time at (or close to) the transmitted correlation reference time (e.g., transmit PRNs, snippets, or reference spectrum captures times) and not simply PVT information alone. Such a user should not be able to spoof encrypted signal captures and would find a considerably higher difficulty in spoofing OS signal captures than spoofing simple PVT information. The server in the service centre may use additional checks to assess the genuineness of the signals (using for example spectrum analysis techniques). For added security, the user PVT is extracted (or authenticated) with the use of a server-based receiver from the encrypted signals as captured and transmitted from the user device. There may also be benefit in not requiring the user device to transmit any simple PVT information (or even any open service signals) across the communications network in order to enforce geographic access controls in that it makes it more difficult for a third party (not having access to the necessary cryptographic keys) to extract the field user location from the information transmitted over the communication networks.

The geographical access control described above may have application in connection with any service in which the PRN sequences of independent satellites are transmitted or where PRN-derived/PRN-related products are broadcast (e.g., snippets or reference spectrum captures) for aiding the field receiver navigation.

Such geographical access control may be used to restrict a field receiver from gaining access to the broadcast messages or restrict the service level by changing the type of broadcast message to that field receiver.

It may be that a user who is not receiving the level of access required / desired as a result of enforced access control is permitted to request a reconnection (or higher level access) after access restriction by sending a spectrum capture that establishes whether the field receiver is in a particular constrained geographical region or not.

It will be seen that the hardware and software required of the system needed to implement the arrangements described with reference to each of Figures 2 to 6 may be identical. The same single user device (field receiver) 2 may thus (a) be able to satisfy multiple missions (i.e. whether navigation or tracking or both), (b) enable location verification and location authentication, (c) operate using the benefit of the extra information provided by the secure (encrypted) signals but without needing a key-loaded security module in the field receiver, and (d) be configured to switch between operating modes based on external triggers, sensors, user command or orders, or other criteria.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The spreading codes may be generated at the satellites' payload security module. There may (or may not) be a step of transmitting a cryptographic key from the ground-based GNSS infrastructure to the satellites.

There may be different processing performed at the user device and at the server(s) from described above. More processing may be done by the user device than the server, or vice versa. For example, in the first mode (e.g. "sampling and processing" mode), the pre-processing by the user device of the GNSS signals may simply be in the form of producing digital samples of the GNSS signals for onward transmission. In certain other cases, the GNSS open signal (or digital representations thereof) need not itself be transmitted from the user device to the server; rather, only open signal PVT data or open signal correlation products are ascertained and then transmitted by the user device to the server for subsequent processing alongside the encrypted signal samples.

The form in which the GNSS samples are transmitted from the user device to the server(s) may differ according to the application. It may be the case that a single wideband set of samples containing both the OS and PRS signals are transmitted by the user device to the servers. It may alternatively be the case that independent narrowband sample sets for, on the one hand, the open signals and, on the other hand, the encrypted signals are transmitted by the user device to the servers.

The transmission, by the remote server to the user device, of replica spreading code segments could be effected over a non-encrypted (i.e. non-secure) communications link in certain embodiments. Different lengths of spreading codes might in some embodiments be sent to the user device. In certain embodiments, the spreading code segments sent may represent the entire codes.

The quality of GNSS signal samples sent by the user device to the server may be ascertained and monitored by the server (optionally by multiple computer servers) in different embodiments from that illustrated herein.

In certain applications, it may be desirable for the user device to have its own security module too.

The signal processing module, particularly of the user device, may be in the form of a dedicated circuit, not being in the form of a programmed computer processor. The signal processing module may for example be in the form of a field-programmable gate array ("FPGA") circuit or a very-large-scale integration ("VLSI") circuit.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A geo-positioning system comprising
(a) a user device comprising
(i) one or more communications interfaces configured
- to receive encrypted and open service GNSS signals from a plurality of satellites; and
- to communicate with one or more remote servers; and
(ii) a signal processing module
(b) one or more computer servers comprising
(i) one or more communications interfaces configured to communicate with one or more user devices; and
(ii) one or more security modules;
wherein
the system is configured to operate both in a first mode and a second mode; the first mode of operation being one in which
- a user device samples GNSS signals including encrypted GNSS signals from a plurality of satellites,
- the user device sends to at least one of the servers sampled GNSS signals for remote processing, and
- the server processes the sampled GNSS signals so received to ascertain PVT information concerning the user device, the processing performed by the server including using at least one of the security modules to process encrypted parts of the sampled GNSS signals so received;
the second mode of operation being one in which
- a user device receives GNSS signals including encrypted GNSS signals from a plurality of satellites,
- at least one of the servers with the use of at least one of the security modules sends one or more replica spreading code segments which are received by the user device, and
- the signal processing module of the user device then uses the GNSS signals including the encrypted GNSS signals and the one or more replica spreading code segments so received to ascertain PVT information concerning the user device.

2. A geo-positioning system according to claim 1, wherein the system is so arranged that it has the capability, in the first mode of operation, of the server using open service signals of the sampled GNSS signals so received by the server to ascertain PVT information and using the encrypted signals of the sampled GNSS signals so received by the server to confirm the authenticity of the open service signals of the GNSS signals used to ascertain the PVT information.

3. A geo-positioning system according to claim 1 or claim 2, wherein the system is so arranged that it has the capability, in the first mode of operation, of the server ascertaining PVT information from the encrypted signals of the sampled GNSS signals so received by the server.

4. A geo-positioning system according to any preceding claim, wherein the system is so arranged that it has the capability, in the second mode of operation, of the user device using open service signals of the GNSS signals so received to ascertain PVT information and using the one or more replica spreading code segments so received by the user device to confirm the authenticity of the open service signals of the GNSS signals used to ascertain the PVT information.

5. A geo-positioning system according to any preceding claim, wherein the system is so arranged that it has the capability, in the second mode of operation, of the user device ascertaining PVT information from the encrypted signals of the GNSS signals so received with the use of the one or more replica spreading code segments so received by the user device.

6. A geo-positioning system according to any preceding claim, wherein the system is arranged to switch from one of the first and second modes of operation to the other in dependence on pre-set criteria.

7. A geo-positioning system according to any preceding claim, wherein the system is arranged to have the capability of operating in both the first and second modes of operation in parallel.

8. A geolocation method using the geo-positioning system of any preceding claim, and operating the system in at least one of the first and second modes of operation.

9. A geolocation method according to claim 8, including the steps of operating the system in the second mode of operation and at the same time
- the user device sampling the GNSS signals from the plurality of satellites,
- the user device sending to at least one of the servers sampled GNSS signals for remote processing, and
- the server processing the sampled GNSS signals so received.

10. A geolocation method according to claim 9, in which the server processes the sampled GNSS signals so received to generate situational awareness information and the method includes a step of the server transmitting the situational awareness information to one or more user devices.

11. A geolocation method according to claim 9, including a step of the server processing the sampled GNSS signals and using encrypted parts of the sampled GNSS signal to provide access control.

12. A geolocation method comprising the steps of:
a user device receiving GNSS signals including encrypted GNSS signals from a plurality of satellites,
the user device sending to a server GNSS signals sampled from those received for remote processing,
the server processing the sampled GNSS signals so received to ascertain PVT information concerning the user device, the processing performed by the server including using a security module associated with the server to process encrypted parts of the sampled GNSS signals so received,
the server, with the use of the security module, sending one or more replica spreading code segments to the user device, and
the user device using the GNSS signals received and the one or more replica spreading code segments so received to ascertain PVT information concerning the user device,
wherein
(a) the step of the server ascertaining PVT information concerning the user device is performed using the open signal of the sampled GNSS signals so received, the step of using the security module to process encrypted parts of the sampled GNSS signals being performed to verify the authenticity of the open signal or
(b) the step of the server ascertaining PVT information concerning the user device is performed using PVT information extracted from the encrypted parts of the sampled GNSS signals with the use of the security module,
and also wherein
(c) the step of the user device ascertaining PVT information concerning the user device is performed using the open signal of the GNSS signals received, the one or more replica spreading code segments being used to verify the authenticity of the open signal, or
(d) the step of the user device ascertaining PVT information concerning the user device is performed using PVT information extracted from the encrypted parts of the GNSS signals received, the one or more replica spreading code segments being used to correlate against and/or decode the encrypted GNSS signals.

13. A user device comprising (i) one or more communications interfaces configured to receive encrypted and open service GNSS signals from a plurality of satellites; and to communicate with one or more remote servers; and (ii) a signal processing module, the user device being configured to perform the function of the user device of any of the preceding claims.

14. One or more computer servers comprising (i) one or more communications interfaces configured to communicate with one or more user devices; and (ii) one or more security modules; the one or more computer servers being configured to perform the function of the one or more computer servers of any of claims 1 to 12.

15. One or more computer program products configured to cause, when the one or more computer program products are executed, a user device to form the user device as claimed in claim 13 and/or one or more computer servers to form the one or more computer servers as claimed in claim 14.
